# EUROPEAN PATENT APPLICATION

(11) **EP 3 751 339 A1**
(43) Date of publication of application: **16.12.2020**
(21) Application number: 19751972.1
(22) Date of filing: 07.02.2019
(51) Int. Cl.: G02F 1/377, G02F 1/355

(54) **OPTICAL WAVELENGTH CONVERTER AND METHOD FOR MANUFACTURING OPTICAL WAVELENGTH CONVERTER**

(30) Priority: 08.02.2018 JP 2018021281
(71) Applicant: SUMITOMO ELECTRIC INDUSTRIES, LTD., Osaka-shi, Osaka 541-0041 (JP)
(72) Inventor: NAGANO, Shigehiro, Osaka-shi, Osaka 541-0041 (JP); FUJIWARA, Takumi, Sendai-shi, Miyagi 980-8577 (JP); TAKAHASHI, Yoshihiro, Sendai-shi, Miyagi 980-8577 (JP); TERAKADO, Nobuaki, Sendai-shi, Miyagi 980-8577 (JP)
(74) Representative: Hoffmann Eitle
(86) International application number: PCT/JP2019/004461
(87) International publication number: WO 2019/156177

(57) **Abstract**

An optical wavelength converter of one embodiment comprises: a substrate comprised of a crystalline material or an amorphous material; plural first crystal regions each having a radial first polarization-ordered structure; and plural second crystal regions each having a radial second polarization-ordered structure. In the substrate, a first and second regions are defined to be directly adjacent to each other with a virtual axis therebetween when the substrate is viewed from a reference direction orthogonal to the virtual axis. Radial centers of the first polarization-ordered structures located in the first region and radial centers of the second polarization-ordered structures located in the second region are alternately arranged along the virtual axis. The plural first crystal regions partially protrude to the second region. The plural second crystal regions partially protrude to the first region.

## Description

### Technical Field

The present disclosure relates to an optical wavelength converter and a method for manufacturing an optical wavelength converter.

The present application claims priority to Japanese Patent Application No. 2018-021281 filed on February 8, 2018, which is incorporated herein by reference in its entirety.

### Background Art

Materials used for optical devices that utilize a second-order nonlinear optical phenomenon primarily include ferroelectric optical crystals such as a LiNbO₃ (LN) crystal, a KTiOPO₄ (KTP) crystal, a LiB₃O₅ (LBO) crystal, and a β-BaB₂O₄ (BBO) crystal. Optical devices using these crystals have been developed in a wide range of application fields with wavelength conversion as a primary application. In the field of laser processing, for example, optical devices utilizing these crystals are shortened in wavelength using a second harmonic generation (SHG) of an optical fiber laser. Since a diameter of a beam spot can be made short, such optical devices are used in fine processing. In the field of optical communication, optical devices utilizing these crystals are used as optical wavelength converters that perform simultaneous wavelength conversion from C-band WDM signals to L-band signals in order for effective utilization of wavelength resources in wavelength division multiplexing (WDM) optical communication. Further, in the field of measurement, attention is paid to terahertz spectroscopy, which allows observation of intermolecular vibrations caused by hydrogen bonding and the like, and optical devices utilizing these crystals are used as light sources generating terahertz light.

Recently, compound semiconductor crystals such as GaAs, GaP, GaN, CdTe, ZnSe, and ZnO have also been used as materials for optical devices utilizing the second-order nonlinear optical phenomenon. These materials have attracted attention as materials for a second-order nonlinear device due to a remarkable progress in techniques of fabricating a periodically spatially-poled structure, which is essential for the second-order nonlinear optical device in addition to having a large second-order nonlinear optical constant.

Schemes of the wavelength conversion can be classified into angle phase matching and quasi phase matching (QPM) by periodically-poling. Among these, the quasi phase matching enables generation of various phase matching wavelengths and wavelength conversion in all transparent regions of a material by properly designing a poling pitch. In addition, the quasi phase matching has no walk-off angle caused by the angle phase matching, a beam quality is excellent, and an interaction length can be made long. Therefore, the quasi phase matching is a method which is suitable for increasing efficiency and inhibiting a coupling loss and is effective in processing, measurement, and the like.

### Citation List

### Patent Literature

Patent Document 1: PCT International Application Publication No. 2017/110792

### Non-Patent Literature

Non-Patent Document 1: R. Gatass and E. Mazur, Nature Photonics 2, P. 219 (2008)
Non-Patent Document 2: U. Ito, et al., "Ultrafast and precision drilling of glass by selective absorption of fiber-laser pulse into femtosecond-laser-induced filament", Applied Physics Letters, Vol. 113, 2018, pp. 061101-1

### Summary of Invention

An optical wavelength converter of the present disclosure includes: a substrate comprised of a crystalline material or an amorphous material; a plurality of first crystal regions respectively having radial first polarization-ordered structures; and a plurality of second crystal regions respectively having radial second polarization-ordered structures. In the substrate, a first region and a second region are defined to be directly adjacent to each other with the virtual axis therebetween when the substrate is viewed from a reference direction orthogonal to a certain virtual axis set in the substrate. Radial centers of the first polarization-ordered structures are arranged along the virtual axis in the first region of the substrate. When the substrate is viewed from the reference direction, each of the plurality of first crystal regions partially protrudes to the second region across the virtual axis. Radial centers of the second polarization-ordered structures are arranged along the virtual axis in the second region of the substrate, and the radial centers of the second polarization-ordered structure are arranged alternately with the radial centers of the first polarization-ordered structure along the virtual axis. When the substrate is viewed from the reference direction, each of the plurality of second crystal regions partially protrudes to the first region across the virtual axis.

A method for manufacturing an optical wavelength converter according to the present disclosure includes: a preparation step of preparing a substrate; and a first processing step of providing a plurality of first crystal regions respectively having radial first polarization-ordered structures and a plurality of second crystal regions respectively having radial second polarization-ordered structures in the substrate. The substrate is comprised of a crystalline material or an amorphous material. In addition, in the substrate, a first region and a second region, directly adjacent to each other with the virtual axis therebetween when the substrate is viewed from a reference direction orthogonal to a certain virtual axis set in the substrate, are defined. Radial centers of the first polarization-ordered structures of the plurality of first crystal regions are arranged along the virtual axis in the first region of the substrate. In addition, when the substrate is viewed from the reference direction, each of the plurality of first crystal regions partially protrudes to the second region across the virtual axis. On the other hand, radial centers of the second polarization-ordered structures of the plurality of second crystal regions are arranged along the virtual axis in the second region of the substrate. In addition, each of the plurality of second crystal regions partially protrudes to the first region across the virtual axis in a state where the radial centers of the second polarization-ordered structure are arranged alternately with the radial centers of the first polarization-ordered structures along the virtual axis when the substrate is viewed from the reference direction. The first processing step includes a laser light irradiation step, the laser light irradiation step of irradiating each of a plurality of first condensing points corresponding to the radial centers of the first polarization-ordered structures of the plurality of first crystal regions and each of a plurality of second condensing points corresponding to the radial centers of the second polarization-ordered structures of the plurality of second crystal regions with laser light for formation of the first and second polarization-ordered structures.

### Brief Description of Drawings

Fig. 1 is a cross-sectional view illustrating a structure of an optical wavelength converter 1A according to one embodiment of the present invention.
Fig. 2 is an enlarged plan view of crystal regions 10A and 10B.
Fig. 3 is a flowchart illustrating a manufacturing method according to one embodiment.
Fig. 4 is a view illustrating a state where a plurality of condensing points P1 and a plurality of condensing points P2 are set on a substrate 2.
Fig. 5 is a graph illustrating an example of a light intensity distribution of laser light according to one embodiment.
Fig. 6 is a cross-sectional view illustrating a configuration of an optical wavelength converter 1B according to a first modification.
Fig. 7 is a graph illustrating an example of a light intensity distribution of laser light for formation of crystal regions 10A and 10B of the first modification.
Fig. 8 is a diagram illustrating an example of an optical system configured to obtain the light intensity distribution illustrated in Fig. 7.
Fig. 9A is a cross-sectional view illustrating a configuration of an optical wavelength converter 1C according to a second modification.
Fig. 9B is a graph illustrating an electric field distribution in a wavelength conversion region B1.
Fig. 9C is a graph illustrating an electric field distribution in a wavelength conversion region B2.
Fig. 10A is a plan view illustrating a configuration of an optical wavelength converter 1D according to a third modification of the above-described embodiment.
Fig. 10B is a cross-sectional view along a line IXb-IXb of Fig. 10A.
Fig. 10C is a cross-sectional view along a line IXc-IXc of Fig. 10A.
Fig. 11 is a cross-sectional view illustrating one step of a method for manufacturing an optical wavelength converter according to a fourth modification of the above-described embodiment.
Fig. 12 is a cross-sectional view illustrating one step of a method for manufacturing an optical wavelength converter according to a fifth modification.
Fig. 13A is a schematic view for describing a polarization orientation in a crystal region formed using laser light having the light intensity distribution illustrated in Fig. 5.
Fig. 13B is a schematic view for describing a polarization orientation in a crystal region formed by the method for manufacturing the optical wavelength converter according to the fifth modification.
Fig. 14A is an optical microscope image illustrating a state after irradiating a SrO-TiO₂-SiO₂-based glass with laser light from a CO₂ laser.
Fig. 14B is a partially enlarged view of Fig. 14A.
Fig. 15A is an optical microscope image illustrating a state after irradiating a SrO-TiO₂-SiO₂-based glass with laser light from a CO₂ laser.
Fig. 15B is a partially enlarged view of Fig. 15A.
Fig. 16A is an optical microscope image illustrating a state after irradiating a SrO-TiO₂-SiO₂-based glass with laser light from a CO₂ laser.
Fig. 16B is a partially enlarged view of Fig. 16A.
Fig. 17 is an image illustrating a measurement result of second harmonic generation.

### Description of Embodiments

[Problems to be solved by the invention] As a result of examining conventional optical wavelength converters, the inventors have found out the following problems. That is, as an optical wavelength converter that performs quasi phase matching, an optical device obtained by a combination of molding-in-place of glass and a wavelength conversion technique has been proposed (see, for example, Patent Document 1). Advantages of such an optical wavelength converter are a point that it is possible to process the glass into various shapes such as a fiber form and a thin film form since a substrate material is the glass and a point that a wavelength conversion function can be imparted to the shape. Patent Document 1 describes a method for forming a polarization-ordered structure defined by a polarization orientation by irradiating laser in a state where an electric field is applied. Meanwhile, the polarization-ordered structure for realizing quasi phase matching is fine, and an interval between adjacent polarization-ordered structures is extremely short. In such a structure, an interval between a positive electrode and a negative electrode configured to apply the electric field becomes narrow, and thus, there is a problem that processing steps are complicated in order to avoid dielectric breakdown when a high voltage is applied.

The present disclosure has been made in order to solve such a problem, and an object thereof is to provide an optical wavelength converter capable of forming a polarization-ordered structure for realizing quasi phase matching by a simple method and a method for manufacturing the optical wavelength converter.

### [Effect of the present disclosure]

According to the optical wavelength converter and the method for manufacturing the optical wavelength converter of the present disclosure, crystal regions having radial polarization-ordered structures are formed alternately along a virtual axis in a pair of regions sandwiching the virtual axis.

### [Description of Embodiments of Present Disclosure]

First, contents of embodiments of the present disclosure will be individually listed and described.
(1) The optical wavelength converter according to one embodiment of the present disclosure has, as one aspect, includes: a substrate comprised of a crystalline material or an amorphous material; a plurality of first crystal regions each having a radial first polarization-ordered structure; and a plurality of second crystal regions each having a radial second polarization-ordered structure. In the substrate, a first region and a second region are defined to be directly adjacent to each other with the virtual axis therebetween when the substrate is viewed from a reference direction orthogonal to a certain virtual axis set in the substrate. Radial centers of the first polarization-ordered structures are arranged along the virtual axis in the first region of the substrate. When the substrate is viewed from the reference direction, each of the plurality of first crystal regions partially protrudes to the second region across the virtual axis. Radial centers of the second polarization-ordered structures are arranged along the virtual axis in the second region of the substrate, and the radial centers of the second polarization-ordered structure are arranged alternately with the radial centers of the first polarization-ordered structure along the virtual axis. When the substrate is viewed from the reference direction, each of the plurality of second crystal regions partially protrudes to the first region across the virtual axis.
   In the optical wavelength converter having the above-described structure, the radial polarization-ordered structures are alternately arranged on both sides of the virtual axis. Accordingly, polarization orientations that intersect the virtual axis and are opposite to each other appear alternately on the virtual axis. Therefore, quasi phase matching by periodically-poling can be performed on light propagating on the virtual axis. In addition, the respective crystal regions of the optical wavelength converter can be easily formed by irradiating the substrate with laser light having a wavelength included in an absorption wavelength of the substrate or by forming a heat source on a surface of or inside the substrate.
(2) As one aspect of the present embodiment, the substrate preferably has a channel optical waveguide structure having the virtual axis as an optical axis. Such a channel optical waveguide structure can enhance a light propagation efficiency on the virtual axis. As one aspect of the present embodiment, the substrate preferably includes at least one of a fresnoite-type crystal, a BaO-TiO₂GeO₂SiO₂-based glass, and a SrO-TiO₂-SiO₂-based glass. For example, the above-described radial polarization-ordered structure can be easily formed by the irradiation of laser light in these substrates. Further, as one aspect of the present embodiment, the substrate may include at least one of a BaO-TiO₂-GeO₂-SiO₂-based glass and a SrO-TiO₂-SiO₂-based glass, and may further include metal included in any group of lanthanoids, actinides, and Groups 4 to 12 as an additive. In this case, the absorption of laser light in the substrate can be enhanced, and the above-described radial polarization-ordered structure can be formed more efficiently.
(3) A manufacturing method of an optical wavelength converter according to one embodiment of the present disclosure, as one aspect, includes: a preparation step of preparing a substrate; and a first processing step of providing a plurality of first crystal regions each having a radial first polarization-ordered structure and a plurality of second crystal regions each having a radial second polarization-ordered structure in the substrate. The substrate is comprised of a crystalline material or an amorphous material. In addition, in the substrate, a first region and a second region, directly adjacent to each other with the virtual axis therebetween when the substrate is viewed from a reference direction orthogonal to a certain virtual axis set in the substrate, are defined. Radial centers of the first polarization-ordered structures of the plurality of first crystal regions are arranged along the virtual axis in the first region of the substrate. In addition, when the substrate is viewed from the reference direction, each of the plurality of first crystal regions partially protrudes to the second region across the virtual axis. On the other hand, radial centers of the second polarization-ordered structures of the plurality of second crystal regions are arranged along the virtual axis in the second region of the substrate. In addition, each of the plurality of second crystal regions partially protrudes to the first region across the virtual axis in a state where the radial centers of the second polarization-ordered structure are arranged alternately with the radial centers of the first polarization-ordered structures along the virtual axis when the substrate is viewed from the reference direction.
   In particular, the first processing step includes a laser light irradiation step. In the laser light irradiation step, each of a plurality of first condensing points corresponding to the radial centers of the first polarization-ordered structures of the plurality of first crystal regions and each of a plurality of second condensing points corresponding to the radial centers of the second polarization-ordered structures of the plurality of second crystal regions are irradiated with laser light for formation of the first and second polarization-ordered structures. The respective crystal regions of the optical wavelength converter can be easily formed by irradiating the substrate with laser light having a wavelength included in an absorption wavelength of the substrate or by forming a heat source on a surface of or inside the substrate. That is, it is possible to form the polarization-ordered structure for realizing quasi phase matching by a simple method according to the manufacturing method.
(4) As one aspect of the present embodiment, the laser light for formation of the polarization-ordered structure preferably has a wavelength included in an absorption wavelength band of the substrate. In this case, the substrate can be directly heated by the irradiation of laser light. In addition, as one aspect of the present embodiment, the laser light for formation of the polarization-ordered structure may include first laser light for generation of a high-density excited electron region on a surface of the substrate or inside the substrate and second laser light for heating of the high-density excited electron region. In such a configuration, each of the plurality of first condensing points and each of the plurality of second condensing points is irradiated with the first laser light and the second laser light in a state where the condensing region of the second laser light overlaps the condensing region of the first laser light, in the laser light irradiation step. In this case, a heat source configured to form the polarization-ordered structure can be formed at an arbitrary position on the surface of or inside the substrate.
(5) Incidentally, various types of laser light can be applied to the first laser light and the second laser light. For example, as one aspect of the present embodiment, it is preferable that the first laser light include fs (femtosecond) laser light having a pulse width of less than 1 ps and having a wavelength outside the absorption wavelength band of the substrate or a wavelength at which the amount of light absorbed by the substrate is suppressed to be low. In addition, as one aspect of the present embodiment, it is preferable that the second laser light include pulsed laser light having a pulse width of 1 ps or more and preferably 1 ns or more and having a wavelength outside the absorption wavelength band of the substrate or a wavelength at which the amount of light absorbed by the substrate is suppressed to be low in a region other than the condensing region of the first laser light. As one aspect of the present embodiment, the second laser light may include continuous wave (CW) laser light having a wavelength outside the absorption wavelength band of the substrate or a wavelength at which the amount of light absorbed by the substrate is suppressed to be low in a region other than the condensing region of the first laser light.
   The condensing region of the first laser light means a region (high-density excited electron region) where excited electrons centered on a condensing point of the first laser light are generated at a high density, and is defined as a region where the density of the number of the excited electrons is 10¹⁹/cm³ or more. In addition, the state where the condensing region of the first laser light and the condensing region of the second laser light overlap each other (hereinafter, referred to as an overlapping state) includes not only the state where the condensing point of the first laser light and the condensing point of the second laser light match each other, but also a state where the condensing points do not match each other. Specifically, even when the condensing point of the second laser light does not exist in the high-density excited electron region (the condensing region of the first laser light), this overlapping state includes a state where a spot diameter of the second laser light is narrowed such that the entire high-density excited electron region or at least a part thereof exists in an irradiation region of the second laser light. When the first laser light (fs laser light) is condensed inside the amorphous substrate, for example, a precursor glass, a high-density excited electron region is temporarily generated in the region where the fs laser light is condensed. If the second laser light (pulsed laser light or CW laser light) is emitted such that the condensing region overlaps the high-density excited electron region while this high-density excited electron region (condensing region of the first laser light) is generated, it is possible to preferentially and selectively induce light absorption only in a local region of the high-density excited electron region. At this time, heat is generated in a light absorption region (the condensing region where the first laser light and the second laser light overlap each other), and a crystal region is formed. Highly efficient optical wavelength converters having various forms such as a bulk shape and a fiber shape can be realized by three-dimensionally scanning the condensing region where the first laser light and second laser light overlap each other, on the surface of or inside the substrate.
(6) As one aspect of the present embodiment, the manufacturing method may further include a second processing step of forming a channel optical waveguide structure having the virtual axis as an optical axis on the substrate, before or after the laser light irradiation step. As a result, the light propagation efficiency on the virtual axis can be enhanced. In addition, the channel optical waveguide structure is preferably formed by a dicing saw or dry etching as one aspect of the present embodiment. As a result, it is possible to easily form the channel optical waveguide structure on the substrate comprised of a crystalline material or an amorphous material.
(7) As one aspect of the present embodiment, in the laser light irradiation step, it is preferable to irradiate the substrate with the laser light via an optical component configured to shape a light intensity distribution of the laser light into a top hat shape. As a result, melting of the substrate at a central portion of each crystal region is suppressed, and the generation of pore at the center of each crystal region can be suppressed. In addition, as one aspect of the present embodiment, the optical component preferably includes a diffractive optical element or an aspheric lens. As a result, it is possible to easily generate the laser light having the light intensity distribution having the top hat shape.
(8) As one aspect of the present embodiment, a light source of the laser light may include a CO₂ laser. As a result, the substrate can be irradiated with laser light in an infrared region included in absorption wavelengths of many substrates with a relatively high light intensity.
(9) As one aspect of the present embodiment, in the laser light irradiation step, the substrate may be irradiated with laser light in a state where a light-absorbing material is arranged on the surface of the substrate. As a result, the absorption of laser light in the substrate can be enhanced, and the above-described radial polarization-ordered structure can be formed more efficiently. Further, as one aspect of one embodiment of the present disclosure, the light-absorbing material is preferably a carbon paste. As a result, the light-absorbing material that efficiently absorbs the laser light can be easily arranged on the substrate.

As described above, each aspect listed in [Description of Embodiments of Invention of Present Application] can be applied to each of the remaining aspects or to all the combinations of these remaining aspects.

### [Detailed Description of Embodiments of Present Disclosure]

Hereinafter, specific examples of the optical wavelength converter and the method for manufacturing the optical wavelength converter of the present disclosure will be described in detail with reference to the accompanying drawings. Incidentally, the present disclosure is not limited to these examples, but is illustrated by the claims, and equivalence of and any modification within the scope of the claims are intended to be included therein. In addition, the same elements in the description of the drawings will be denoted by the same reference signs, and redundant descriptions will be omitted. Further, in the following description, a positional relationship between the respective elements (regions, axes, or the like) means a positional relationship on the surface of the substrate unless otherwise specified.

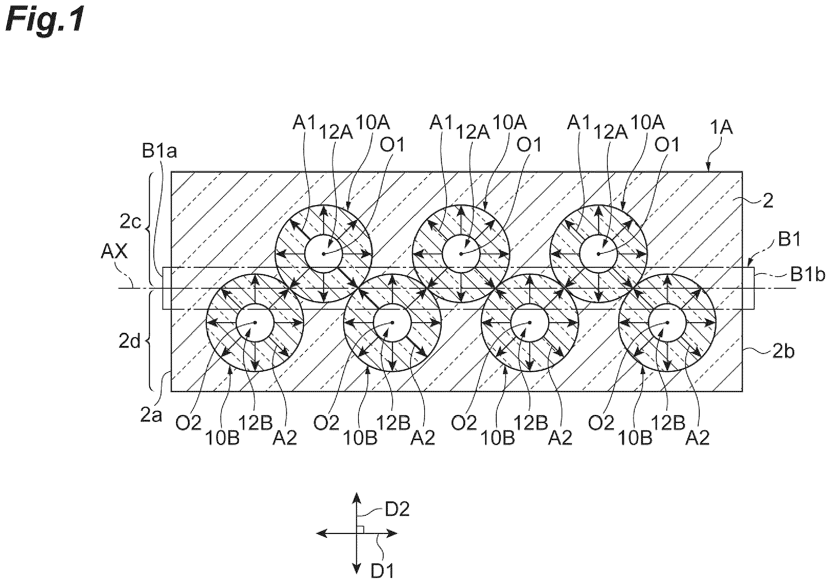

Fig. 1 is a cross-sectional view illustrating a structure of an optical wavelength converter 1A according to one embodiment of the present disclosure, and illustrates a cross section of the optical wavelength converter 1A along an optical waveguide direction D1. As illustrated in Fig. 1, the optical wavelength converter 1A according to the present embodiment includes a substrate 2 comprised of a crystalline material or an amorphous material. The substrate 2 is a substrate having a flat plate face (surface), and has a pair of end faces 2a and 2b arranged to oppose each other along the optical waveguide direction D1. In the present embodiment, the end faces 2a and 2b are orthogonal to the optical waveguide direction D1 and are parallel to each other. The substrate 2 has a property of transmitting at least light of a predetermined wavelength. The predetermined wavelength is, for example, a wavelength in a range of 400 nm to 4500 nm. Examples of a constituent material of the substrate 2 include at least one of a fresnoite-type crystal, a BaO-TiO₂-GeO₂-SiO₂-based glass, and a SrO-TiO₂-SiO₂-based glass.

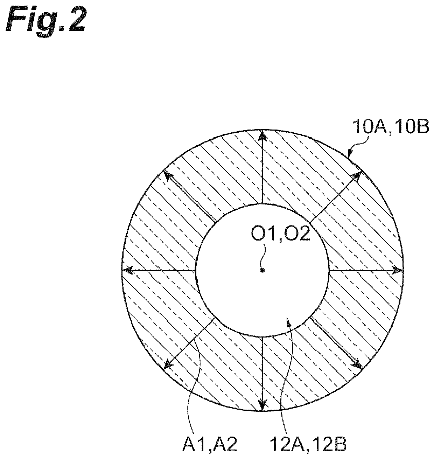

The substrate 2 includes: a plurality of crystal regions 10A (first crystal regions) each having an annular planar shape (shape substantially defined on the surface of the substrate 2) when the substrate 2 is viewed from a reference direction orthogonal to the optical waveguide direction D1 and a plurality of crystal regions 10B (second crystal regions) each having the annular planar shape. Fig. 2 is an enlarged plan view of the crystal regions 10A and 10B. The crystal regions 10A and 10B are regions each having a radial polarization-ordered structure. The polarization-ordered structure refers to a structure in which spontaneous polarization is oriented in a certain manner. The crystal region 10A of the present embodiment has the radial polarization-ordered structure in which spontaneous polarization A1 extends radially from a radial center O1 toward an outer periphery of the crystal region 10A. Similarly, the crystal region 10B of the present embodiment has the radial polarization-ordered structure in which spontaneous polarization A2 extends radially from a radial center 02 toward an outer periphery of the crystal region 10B. This polarization-ordered structure is formed by irradiating the substrate 2 with, for example, laser light in an infrared region as will be described later. When the substrate 2 includes at least one of the BaO-TiO₂-GeO₂-SiO₂-based glass and the SrO-TiO₂-SiO₂-based glass, the substrate 2 may include metal included in any group of lanthanoids, actinoids, and Groups 4 to 12 as an additive in order to enhance absorption of laser light having a specific wavelength in the infrared region. Examples of the lanthanoid-based or actinoid-based metal include Yb, Tm, and Er. In addition, examples of metal belonging to Group 4 to Group 12 include Ti, Cr, and Zn.

As illustrated in Fig. 1, the substrate 2 has a pair of regions 2c and 2d sandwiching a certain virtual axis AX set in the substrate 2. The pair of regions 2c and 2d are regions directly adjacent to each other with the virtual axis therebetween when the substrate 2 is viewed from the reference direction orthogonal to the virtual axis. Then, the radial centers O1 of the plurality of crystal regions 10A (which match radial centers of the polarization-ordered structures) are located in the regions 2c, which is one of both the regions, and are arranged in a line at equal intervals along the virtual axis AX. In addition, the radial centers 02 of the plurality of crystal regions 10B (which match radial centers of the polarization-ordered structure) are located in the other region 2d, and are arranged in a line at equal intervals along the virtual axis AX. Further, the radial centers O1 of the plurality of crystal regions 10A and the radial centers 02 of the plurality of crystal regions 10B are arranged alternately along an extending direction of the virtual axis AX (that is, the optical waveguide direction D1). In other words, when viewing the surface of the substrate 2 from a direction D2 that intersects the extending direction of the virtual axis AX, the radial centers O1 and O2 are alternately arranged on the surface of the substrate 2. Accordingly, a straight line connecting the radial centers O1 and O2 adjacent to each other intersects the virtual axis AX at an angle larger than 0° and smaller than 90° on the surface of the substrate 2. Further, each of a first straight line connecting the plurality of radial centers O1 and a second straight line connecting the plurality of radial centers 02 is parallel to the virtual axis AX. The virtual axis AX is located between these first and second straight lines. That is, a distance between each of the plurality of radial centers O1 and the virtual axis AX is equal, and a distance between each of the plurality of radial centers 02 and the virtual axis AX is equal. In addition, the distance between the radial center O1 and the virtual axis AX and the distance between the radial center 02 and the virtual axis AX are equal to each other. In other words, an axis corresponding to the virtual axis AX (a line defined by the surface of the substrate 2) is parallel to a straight line connecting midpoints of line segments connecting the radial centers O1 and O2 adjacent to each other on the surface of the substrate 2.

Each of the crystal regions 10A partially protrudes to the region 2d side across the virtual axis AX. That is, each of the crystal regions 10A has a portion overlapping the virtual axis AX. In addition, each of the crystal regions 10B partially protrudes to the region 2c across the virtual axis AX. That is, each of the crystal regions 10B has a portion overlapping the virtual axis AX. On the virtual axis AX, the crystal regions 10A and the crystal regions 10B are alternately arranged.

The substrate 2 further has a pore (laser processing mark) 12A inside each of the crystal regions 10A. A planar shape of the pore 12A (the shape defined on the surface of the substrate 2) is a circle centered on the radial center O1. An outer periphery of the pore 12A is in contact with an inner periphery of the crystal region 10A. In addition, the substrate 2 further has a pore (laser processing mark) 12B inside each of the crystal regions 10B. A planar shape of the pore 12B is a circle centered on the radial center 02. An outer periphery of the pore 12B is in contact with an inner periphery of the crystal region 10B. These pores 12A and 12B are holes (recesses or voids) generated when a part of the substrate 2 is melted by the irradiation of the laser light.

In the optical wavelength converter 1A having the above-described structure, a wavelength conversion region B1 is formed inside the substrate 2. The wavelength conversion region B1 is an optical waveguide that extends along the optical waveguide direction D1 with the virtual axis AX as the optical axis. One end B1a of the wavelength conversion region B1 reaches the end face 2a of the substrate 2, and the other end B1b of the wavelength conversion region B1 reaches the end face 2b of the substrate 2. The light of a predetermined wavelength incident from the one end B1a is emitted from the other end B1b after propagating inside the wavelength conversion region B1.

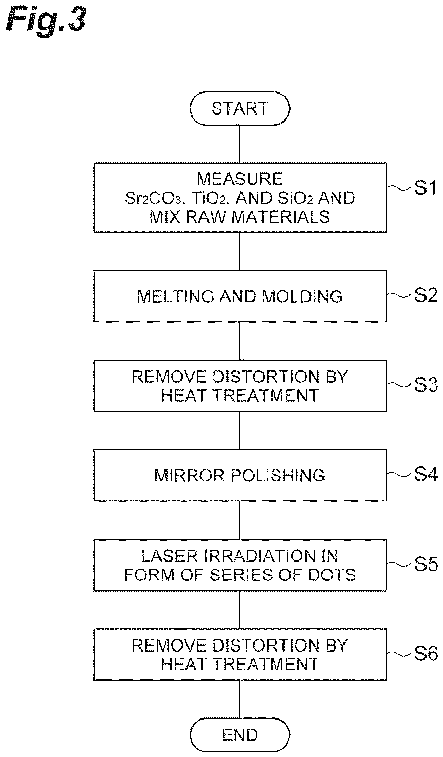

Next, an example of a method for manufacturing the optical wavelength converter 1A of the present embodiment having the above-described structure will be described. Fig. 3 is a flowchart illustrating the manufacturing method of the present embodiment. First, in a preparation step of preparing the substrate 2, raw materials of the substrate 2 (Sr₂CO₃, TiO₂, and SiO₂ in the case of the SrO-TiO₂-SiO₂-based glass) are measured, and then mixed (Step S1). If necessary, the above-described metal that enhances the absorption of laser light may be added to the mixed raw materials. Next, the mixed raw materials are heated and melted, and the molten raw materials are caused to flow into a flat mold and cooled to perform molding, and the substrate 2 is finally obtained (Step S2). A melting temperature is, for example, 1500°C, and a melting time is, for example, one hour. Subsequently, a heat treatment is performed on the substrate 2 to remove distortion of the substrate 2 (Step S3). At this time, a heat treatment temperature is, for example, 760°C, and a heat treatment time is, for example, one hour. Thereafter, mirror polishing is performed on both plate surfaces (front and back surfaces) of the substrate 2 (Step S4).

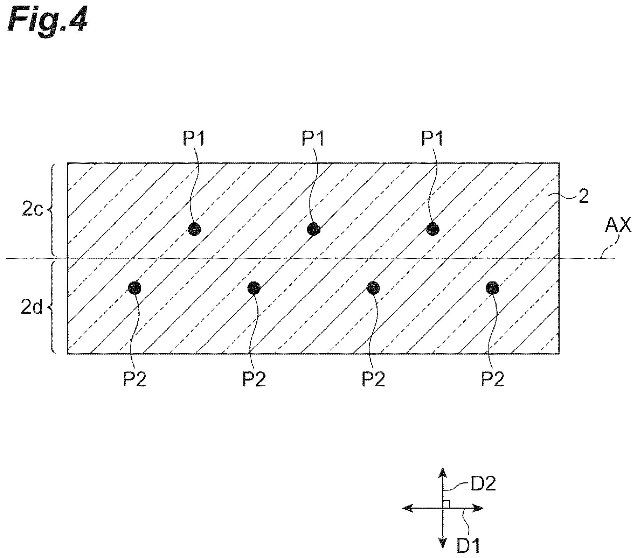

Subsequently, a first processing step of providing the plurality of crystal regions 10A and the plurality of crystal regions 10B in substrate 2 is performed. This first processing step includes a laser light irradiation step. When laser light having a wavelength included in an absorption wavelength of the substrate 2 is used as an example of the laser light irradiation step, the plurality of crystal regions 10A and the plurality of crystal regions 10B are formed by irradiating a plate surface of the substrate 2 with the laser light. Specifically, first, a plurality of condensing points P1 (first condensing points) and a plurality of condensing points P2 (second condensing points) are set on the substrate 2 as illustrated in Fig. 4. That is, the plurality of condensing points P1 are located in one region 2c of the regions sandwiching the virtual axis AX, and are arranged in a line along the virtual axis AX on the surface of the substrate 2. In addition, the plurality of condensing points P1 are located in the other region 2d, and are arranged in a line along the virtual axis AX. Further, the plurality of condensing points P1 and the plurality of condensing points P2 are alternately arranged in the extending direction of the virtual axis AX (that is, in the optical waveguide direction D1). In other words, the condensing points P1 and the condensing points P2 are alternately arranged when the surface of the substrate 2 is viewed from the direction D2 intersecting the extending direction of the virtual axis AX. A first straight line connecting the plurality of condensing points P1 and a second straight line connecting the plurality of light condensing points P1 are parallel to the virtual axis AX. The virtual axis AX is located between these first and second straight lines. That is, a distance between each of the plurality of condensing points P1 and the virtual axis AX is equal, and a distance between each of the plurality of condensing points P1 and the virtual axis AX is equal. In addition, the distance between the condensing point P1 and the virtual axis AX is equal to the distance between the condensing point P2 and the virtual axis AX. In other words, an axis corresponding to the virtual axis AX (a line defined on the surface of the substrate 2) is parallel to a straight line connecting midpoints of line segments connecting the condensing points P1 and P2 adjacent to each other on the surface of the substrate 2.

Then, the laser light is sequentially emitted to the plurality of condensing points P1 and P2 (Step S5). As a result, the substrate 2 is locally crystallized, and the plurality of crystal regions 10A (see Fig. 1) having radial spontaneous polarization with the plurality of condensing points P1 as the radial centers are formed, and the plurality of crystal regions 10B (see Fig. 1) respectively having the radial polarization-ordered structures with the plurality of condensing points P2 as the radial centers are formed. In this step, a power density and an irradiation time of the laser light are adjusted such that each of the crystal regions 10A protrudes to the region 2d side across the virtual axis AX and each of the crystal regions 10B protrudes to the region 2c side across the virtual axis AX. Incidentally, in the above-described example of the laser light irradiation step, a wavelength of the laser light is an arbitrary wavelength included in an absorption wavelength band (for example, a far infrared region) of a material forming the substrate 2. In this step, the power density is increased by condensing the laser light with a condenser lens, if necessary, such that a temperature of a region locally heated by the absorbed energy is 800°C or higher. As a light source of the laser light, for example, a CO₂ laser capable of outputting high-intensity far infrared light is preferable. When the substrate 2 is comprised of the SrO-TiO₂-SiO₂-based glass, a transmittance of the CO₂ laser in a band of 10.6 µm is about several percent. Accordingly, it is possible to suitably form the crystal regions 10A and 10B using the CO₂ laser to cause the substrate 2 to absorb a large amount of laser light. Incidentally, the light source is not limited to the CO₂ laser as long as the amount of heat required for crystallization can be locally applied.

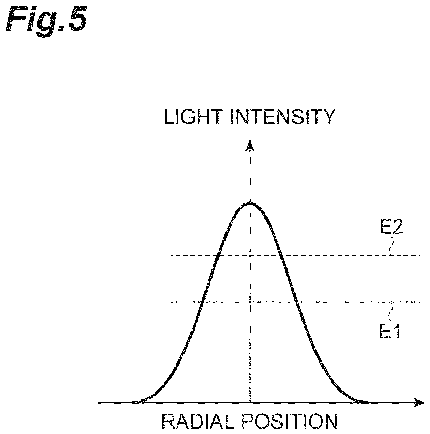

Fig. 5 is a graph illustrating an example of a light intensity distribution of laser light in the present embodiment. In Fig. 5, the horizontal axis indicates a radial position, and the vertical axis indicates a light intensity. In addition, a broken line E1 is a crystallization threshold of the substrate 2, and a broken line E2 is a processing (melting) threshold of the substrate 2. As illustrated in Fig. 5, the laser light emitted to the substrate 2 in the present embodiment has the light intensity distribution such as a Gaussian distribution. That is, the light intensity at the center is the highest, and the light intensity gradually decreases as a distance from the center increases. Then, the light intensity at the center exceeds the processing (melting) threshold of the substrate 2. According to the laser light having such a light intensity distribution, the power density near the condensing points P1 and P2 becomes high, and thus, the substrate 2 is locally melted to form the pores 12A and 12B. In addition, the power density has a magnitude between the crystallization threshold and the processing (melting) threshold around the pores 12A and 12B so that the crystallized crystal regions 10A and 10B are formed.

At the end of the first processing step, a heat treatment is performed on the substrate 2 to remove the distortion of the substrate 2 again (Step S6). At this time, a heat treatment temperature is, for example, 760°C, and a heat treatment time is, for example, one hour. The optical wavelength converter 1A according to the present embodiment is manufactured through the above-described preparation step and first processing step (including the laser light irradiation step).

Effects obtained by the optical wavelength converter 1A and the method manufacturing for the same according to the present embodiment described above will be described. In the optical wavelength converter 1A and the method manufacturing for the same according to the present embodiment, the radial polarization-ordered structures are alternately arranged on both sides of the virtual axis AX when the surface (laser irradiation surface) of the substrate 2 is viewed. Accordingly, polarization orientations, which intersect the virtual axis AX and are opposite to each other (inverted by 180 degrees), appear periodically and alternately in the wavelength conversion region B1 including the virtual axis AX. Therefore, the quasi phase matching by periodically-poling can be performed on the light propagating in the wavelength conversion region B1. In addition, each of the crystal regions 10A and 10B of the optical wavelength converter 1A of the present embodiment can be easily formed by irradiating the substrate 2 with the laser light having the wavelength included in the absorption wavelength band of the substrate 2. In addition, the crystal regions 10A and 10B are formed by irradiating the substrate 2 with the laser light having the wavelength included in the absorption wavelength band of the substrate 2 in the manufacturing method of the present embodiment. That is, the polarization-ordered structure configured to realize the quasi phase matching can be formed by a simple method according to the optical wavelength converter 1A and its manufacturing method of the present embodiment.

In addition, the substrate 2 may include at least one of the fresnoite-type crystal, the BaO-TiO₂-GeO₂-SiO₂-based glass, and the SrO-TiO₂-SiO₂-based glass as in the present embodiment. For example, the above-described radial polarization-ordered structure can be easily formed by the irradiation of laser light in these substrates 2. Further, when the substrate 2 includes at least one of the BaO-TiO₂-GeO₂-SiO₂-based glass and the SrO-TiO₂-SiO₂-based glass, the substrate 2 may include, as an additive, metal included in any group of lanthanoids, actinides, and Groups 4 to 12. As a result, the absorption of the laser light in the substrate 2 is enhanced, and the above-described radial polarization-ordered structure can be formed more efficiently.

In addition, the CO₂ laser may be applied as the light source of the laser light as in the present embodiment. As a result, the substrate 2 can be irradiated with the laser light in the infrared region included in the absorption wavelength bands of many substrates in the state of having a relatively high light intensity.

### (First Modification)

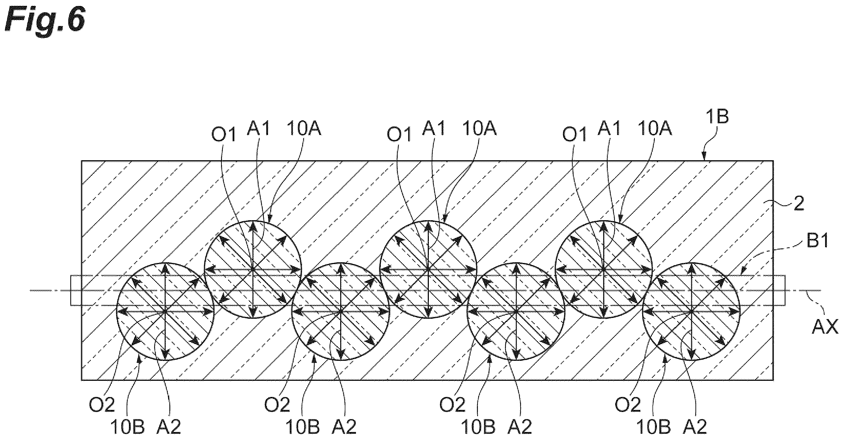

Fig. 6 is a cross-sectional view illustrating a configuration of an optical wavelength converter 1B according to a first modification of the above-described embodiment. A difference between the present modification and the above-described embodiment is the shape of the crystal regions 10A and 10B. In other words, the crystal regions 10A and 10B of the present modification have circular shapes centered on the radial centers O1 and O2 of radial polarization-ordered structures, instead of annular shapes. Then, the radial centers O1 and O2 are included in the crystal regions 10A and 10B, respectively. Accordingly, the optical wavelength converter 1B of the present modification does not include the pores 12A and 12B.

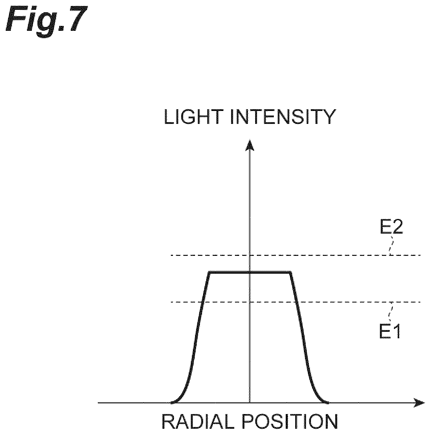

Fig. 7 is a graph illustrating an example of a light intensity distribution of laser light for formation of the crystal regions 10A and 10B of the present modification. In Fig. 7, the horizontal axis indicates a radial position, and the vertical axis indicates a light intensity. A broken line E1 is a crystallization threshold of the substrate 2, and a broken line E2 is a processing (melting) threshold of the substrate 2. As illustrated in Fig. 7, the laser light emitted to the substrate 2 in the present modification has a light intensity distribution having a top hat (flat top) shape. That is, the light intensity is substantially constant in a region within a certain radius from the center, and the light intensity gradually decreases as a distance from the center increases in the outer region. Then, the light intensity in the region within the certain radius from the center is higher than the crystallization threshold of the substrate 2 and lower than the processing (melting) threshold. According to such a light intensity distribution, a power density near the condensing points P1 and P2 becomes lower than the melting threshold, and thus, the substrate 2 does not melt, and the pores 12A and 12B are not formed. In addition, the power density becomes a magnitude between the crystallization threshold and the processing (melting) threshold in the region within a certain radius from the condensing points P1 and P2 so that crystallized regions (the crystal regions 10A and 10B) are formed.

According to the optical wavelength converter 1B according to the present modification, the same effects as those of the above-described embodiment can be achieved. In addition, as the light intensity distribution of the laser light has the top hat shape as in the present modification, it is possible to suppress the melting of the substrate 2 in a central portion of each of the crystal regions 10A and 10B and to suppress the formation of the pores 12A and 12B at the centers of the respective crystal regions 10A and 10B. As a result, it is possible to suppress deterioration of device performance due to cracks or the like caused by the pores 12A and 12B.

When manufacturing the optical wavelength converter 1B according to the present modification, it is sufficient to irradiate the substrate 2 with laser light via an optical component that converts a light intensity distribution of the laser light into a top hat shape as illustrated in Fig. 7. Examples of such an optical component include a diffractive optical element (DOE) or an aspheric lens. The laser light having the light intensity distribution in the top hat shape can be easily generated using such an optical component.

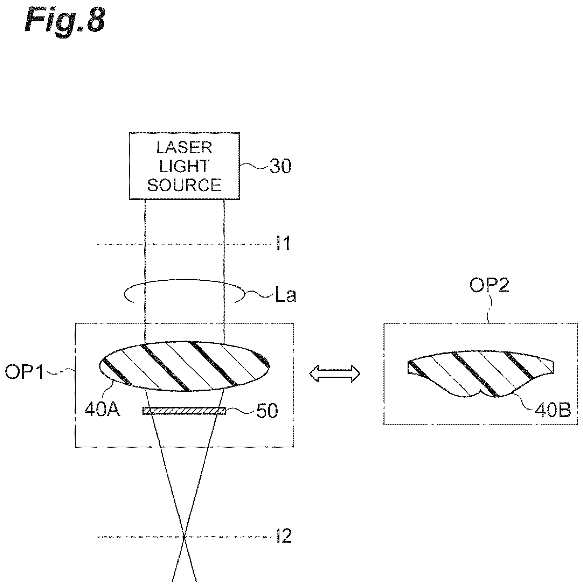

Fig. 8 is a diagram illustrating an example of an optical system configured to obtain the light intensity distribution illustrated in Fig. 7. In the example illustrated in Fig. 8, an optical component OP1 is arranged between a laser light source (which may include an optical system configured to collimate laser light La) 30 which outputs the collimated laser light La and a condensing point. As the optical component OP1, a condenser lens 40A and a diffractive optical element 50 are arranged in order from the laser light source 30 toward the condensing point. In such a configuration, a light intensity distribution I1 of the laser light La between the laser light source 30 and the condenser lens 40A has a Gaussian distribution shape illustrated in Fig. 5. On the other hand, a light intensity distribution 12 of the laser light La, which has passed through the condenser lens 40A and the diffractive optical element 50, at the condensing point has the top hat shape as illustrated in Fig. 7. Incidentally, the optical component OP1 may be replaced with an optical component OP2 including an aspheric lens 40B. Even when the optical component OP2 is arranged between the laser light source 30 and the condensing point of the laser light La, a shape of the light intensity distribution 12 at the condensing point is a top hat shape.

### (Second Modification)

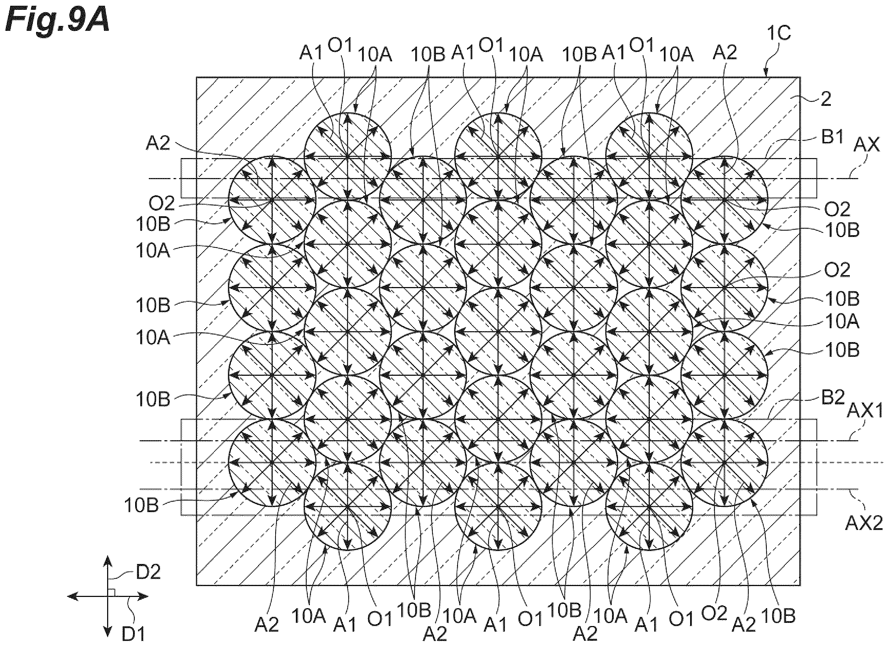

Fig. 9A is a cross-sectional view illustrating a configuration of an optical wavelength converter 1C according to a second modification of the above-described embodiment. Differences between the present modification and the above-described embodiment are that the crystal regions 10A and 10B include the radial centers O1 and O2 of radial polarization-ordered structures but there are no pores 12A and 12B similarly to the first modification and that the crystal regions 10A and 10B are alternately arranged even in the direction D2 intersecting the optical waveguide direction D1. In such a configuration, the same wavelength conversion region B1 as in the above-described embodiment can be formed by the crystal regions 10A and 10B located on both sides of a certain virtual axis AX. In addition, the wavelength conversion region B2 can be formed by the crystal regions 10A and 10B located on both sides of one virtual axis AX1 and the crystal regions 10B and 10A located on both sides of a virtual axis AX2 adjacent to the virtual axis AX1 (the crystal region 10B is common with that on the side of the virtual axis AX1). That is, the wavelength conversion region B2 is a region including the two virtual axes AX1 and AX2 and extending along the optical waveguide direction D1. A width of the wavelength conversion region B2 along the direction D2 is substantially equal to a period of the radial centers O1 along the direction D2 (that is, a period of the condensing points PI).

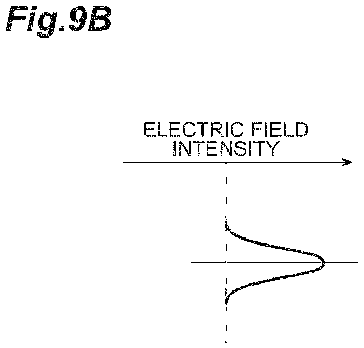

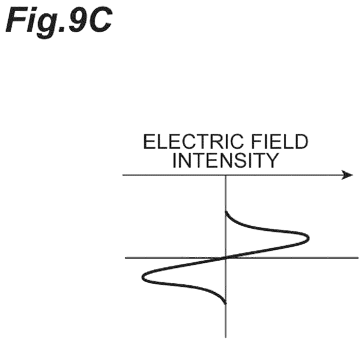

Figs. 9B and 9C are graphs illustrating electric field distributions where wavelength conversion can be effectively performed in the wavelength conversion regions B1 and B2, respectively. The horizontal axis indicates an electric field intensity, and the vertical axis indicates a position in the direction D2. In the wavelength conversion region B1, the electric field intensity distribution is in an LP₀₁ mode (fundamental mode) as illustrated in Fig. 9B. On the other hand, the electric field intensity distribution is in an LP₁₁ mode in the wavelength conversion region B2 as illustrated in Fig. 9C. Even in such an electric field mode, the wavelength conversion is suitably performed. Incidentally, the electric field intensity distribution is in the LP₁₁ mode before and after the wavelength conversion in the wavelength conversion region B2.

### (Third Modification)

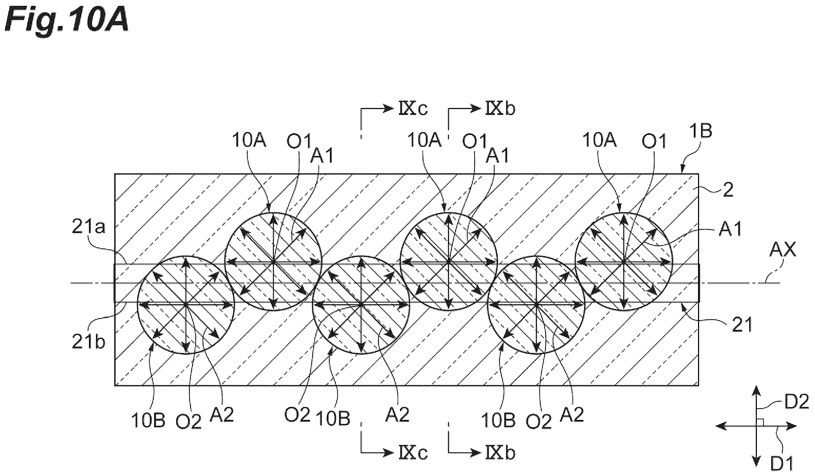

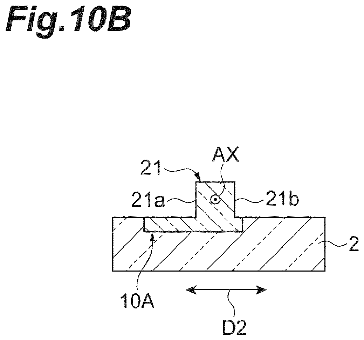

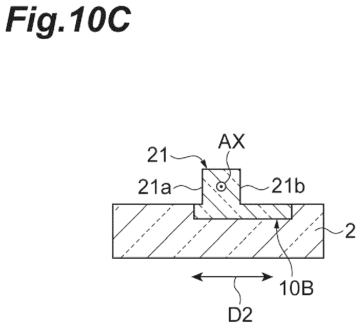

Fig. 10A is a plan view illustrating a configuration of an optical wavelength converter 1D according to a third modification of the above-described embodiment. Fig. 10B is a cross-sectional view taken along a line IXb-IXb of Fig. 10A, and illustrates a cross section that intersects the optical waveguide direction D1. Fig. 10C is a cross-sectional view along a line IXc-IXc of Fig. 10A, and illustrates a cross section that intersects the optical waveguide direction D1. In the optical wavelength converter 1D according to the present modification, the substrate 2 has a channel optical waveguide structure 21 having the virtual axis AX as an optical axis. The channel optical waveguide structure 21 has a pair of side faces 21a and 21b extending along the virtual axis AX. In one example, one side face 21a is located between the virtual axis AX and the radial center O1 in a cross section of the substrate 2 along the line IXb-IXb. In a cross section of the substrate 2 along the line IXc-IXc, the other side face 21b is located between the virtual axis AX and the radial center 02. The side faces 21a and 21b are obtained by, for example, a second processing step performed before or after Step S5 (step corresponding to the laser light irradiation step) illustrated in Fig. 3. In the second processing step, a portion of the substrate 2 located outside the channel optical waveguide structure 21 is removed by dry etching, whereby the side faces 21a and 21b can be easily formed.

As in the present modification, the optical wavelength converter according to the embodiment may include the substrate 2 having the channel optical waveguide structure 21 with the virtual axis AX as the optical axis. In addition, a method for manufacturing the optical wavelength converter may further include the second processing step of forming the channel optical waveguide structure 21 in the substrate 2 as described above. As a result, the light propagation efficiency on the virtual axis AX (wavelength conversion region B1) can be enhanced.

Incidentally, as a method for forming the channel optical waveguide structure in the substrate 2 (the second processing step), various methods other than the above method are conceivable. Examples thereof include a method of cutting the substrate 2 with a dicing saw while leaving a portion which is to serve as a channel optical waveguide structure, a method of partially changing a refractive index by diffusing an additive such as Ge and Ti into the substrate 2, a method of forming a channel optical waveguide structure inside the substrate 2 by a proton (H⁺) exchange method, and the like.

### (Fourth Modification)

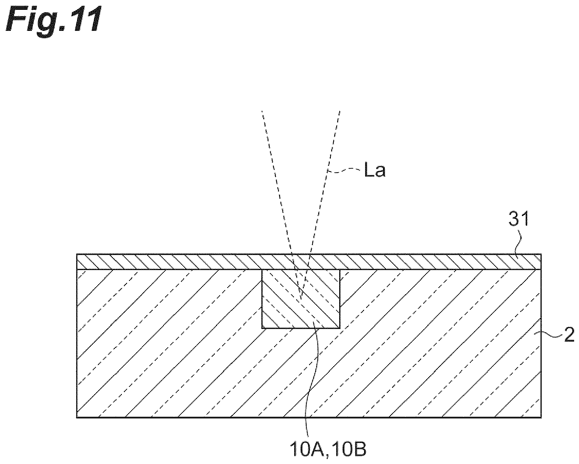

Fig. 11 is a cross-sectional view illustrating a step in a manufacturing method of an optical wavelength converter according to a fourth modification of the above-described embodiment, and illustrates a cross section of the substrate 2 which intersects the optical waveguide direction D1. In the present modification, the substrate 2 on which a light-absorbing material 31 is arranged is irradiated with the laser light La in Step S5 (step corresponding to the laser light irradiation step) illustrated in Fig. 3. The light-absorbing material 31 includes a material having absorption in a band including a wavelength of the laser light La. A method of arranging the light-absorbing material 31 on the surface of the substrate 2 includes coating, sputtering, vapor deposition and the like. For example, the light-absorbing material 31 is comprised of a material containing carbon, and is a carbon paste (a conductive paste obtained by adding carbon particles as a filler to resin) in one example.

According to the method of the present modification, the absorption of the laser light La in the substrate 2 is enhanced, and a radial polarization-ordered structure can be formed more efficiently. In addition, a carbon paste may be applied as the light-absorbing material 31 in this case. As a result, the light-absorbing material 31 that efficiently absorbs laser light power is easily arranged on the substrate 2. In addition, the carbon paste has a wide absorption band, and thus, can absorb light in a wavelength band oscillated by a fiber laser, a solid-state laser, or a semiconductor laser other than the CO₂ laser. Further, the carbon paste can be easily removed by washing or the like after the laser light irradiation.

Incidentally, various methods other than the above method are conceivable as a method of enhancing the absorption efficiency of the laser light. For example, there is a method of increasing a light absorption rate of the substrate 2 in advance by a reduction reaction before laser light irradiation, and restoring the light absorption rate by an oxidation reaction after the laser light irradiation.

### (Fifth Modification)

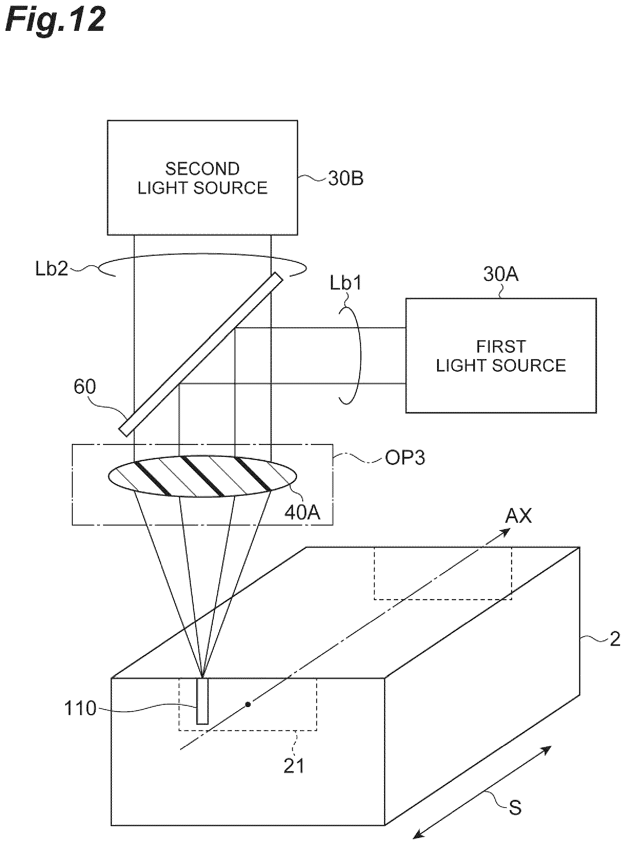

Fig. 12 is a view illustrating one step in the manufacturing method of the optical wavelength converter according to the fourth modification of the above-described embodiment, and is a view for describing the laser light irradiation step corresponding to Step S5 of Fig. 3. Although the laser light La having the wavelength included in the absorption wavelength band of the substrate 2 is used in the above-described modification, first laser light Lb1 for generation of a high-density excited electron region on a substrate surface or in the substrate and second laser light Lb2 for heating of the high-density excited electron region are emitted as laser light for formation of a polarization-ordered structure in the present modification. That is, in the laser light irradiation step, each of the plurality of condensing points P1 and each of the plurality of condensing points P2 are irradiated with the first laser light Lb1 and the second laser light Lb2 in a state where a condensing region of the second laser light Lb2 overlaps a condensing region of the first laser light Lb1.

Incidentally, the first laser light Lb1 is suitably fs laser light having a pulse width of less than 1 ps and having a wavelength outside the absorption wavelength band of the substrate 2 or a wavelength at which the amount of light absorbed by the substrate 2 can be suppressed to be low. In addition, the second laser light Lb2 is suitably pulsed laser light having a pulse width of 1 ps or more and preferably 1 ns or more and having the wavelength outside the absorption wavelength band of the substrate 2 or a wavelength at which the amount of light absorbed by the substrate 2 is suppressed to be low in a region other than the condensing region of the first laser light Lb1. The second laser light Lb2 may be CW laser light having a wavelength outside the absorption wavelength band of the substrate 2 or having a wavelength at which the amount of light absorbed by the substrate 2 can be suppressed to be low in a region other than the condensing region of the first laser light Lb1. As a light source for irradiation of the second laser light Lb2, a laser light source such as the above-described CO₂ laser, a fiber laser, a semiconductor laser, and a solid-state laser is suitable.

It is known that a high-density excited electron region is generated instantaneously in a condensing region of the fs laser light applicable to the first laser light Lb1 depending on an irradiation condition (Non-Patent Document 1). In addition, the laser light having the pulse width of 1 ns or more (for example, a wavelength of 1070 nm) applicable to the second laser light Lb2 is emitted so as to overlap the high-density excited electron region (condensing region of the first laser light Lb1), light energy of the emitted laser light is preferentially and selectively absorbed only in this region. As a result, the above-described Non-Patent Document 2 discloses that the region that has absorbed the light energy (high-density excited electron region is a region temporarily generated by irradiation of the first laser light Lb1) effectively generates heat as a hot filament. The amount of heat generated in the region (hot filament) that has absorbed the light energy of the second laser light Lb2 depends on the irradiation time of the second laser light Lb2. That is, as the amount of generated heat increases, a temperature in a peripheral region centered on the hot filament also increases (a region exceeding the crystallization threshold E1 illustrated in Figs. 5 and 7). At this time, crystallization of the peripheral region becomes possible by controlling the amount of generated heat in the absorption region such that the temperature of the peripheral region becomes equal to or lower than the processing (melting) threshold E2.

Specifically, the substrate 2 having the channel optical waveguide structure 21 is prepared in the laser light irradiation step (Step S5 in Fig. 3) of the present modification as illustrated in Fig. 12. From a first light source 30A, each of the condensing points P1 (matching the radial centers O1) and the condensing points P2 (matching the radial centers O2) illustrated in Figs. 4 and 9A is irradiated with the first laser light Lb1 (fs laser light) for generation of the high-density excited electron region on the surface of or inside the substrate 2. On the other hand, the substrate 2 is irradiated with the second laser light Lb2 (pulsed laser light or CW laser light having the pulse width of 1 ps or more, and preferably 1 ns or more) for heating of the high-density excited electron region, temporarily generated by the irradiation of the first laser light Lb1, from a second light source 30B. In the example of Fig. 12, the first laser light Lb1 and the second laser light Lb2 are emitted coaxially. That is, the common optical component OP3 (including the condenser lens 40A) and a half mirror 60 are arranged in each of an optical path of the first laser light Lb1 from the first light source 30A to the substrate 2 and an optical path of the second laser light Lb2 from the second light source 30B to the substrate 2. Such a coaxial irradiation system has an advantage that it can be easily configured. However, the optical path of the first laser light Lb1 and the optical path of the second laser light Lb2 may be different.

The substrate 2 is irradiated with the first laser light Lb1 and the second laser light Lb2 in synchronization with each other. During a laser irradiation period, the first laser light Lb1 outputted from the first light source 30A is reflected by the half mirror 60 and travels to the condenser lens 40A. Further, the first laser light Lb1 that has passed through the condenser lens 40A is condensed near the surface of the substrate 2. The high-density excited electron region is generated in the condensing region of the first laser light Lb1. At the same time, the second laser light Lb2 outputted from the second light source 30B passes through the half mirror 60 and travels to the condenser lens 40A. Further, the second laser light Lb2 that has passed through the condenser lens 40A is condensed so as to overlap the high-density excited electron region. The light energy of the second laser light Lb2 is efficiently absorbed in the high-density excited electron region, and the high-density excited electron region functions as a hot filament 110 at this time. As a result, the crystal regions 10A and 10B oriented to be perpendicular to a temperature contour in the peripheral region of the hot filament 110 are formed in the substrate 2.

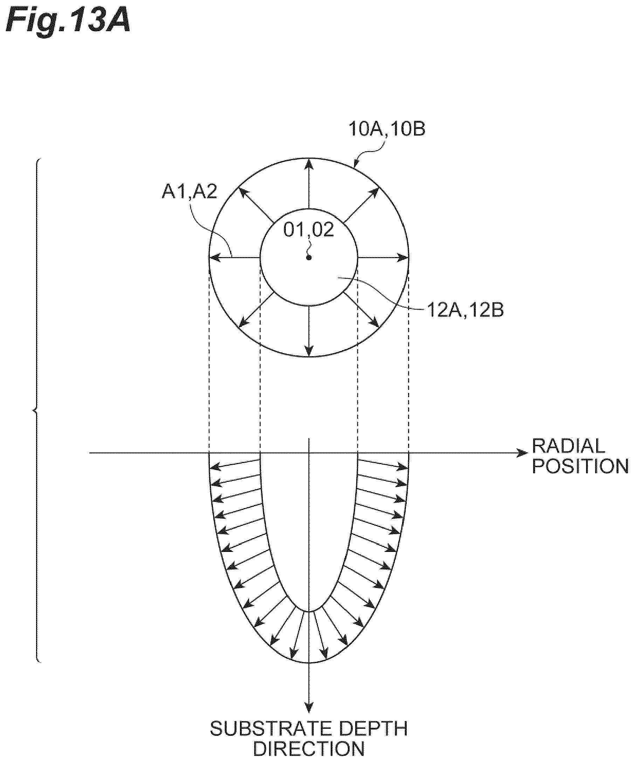

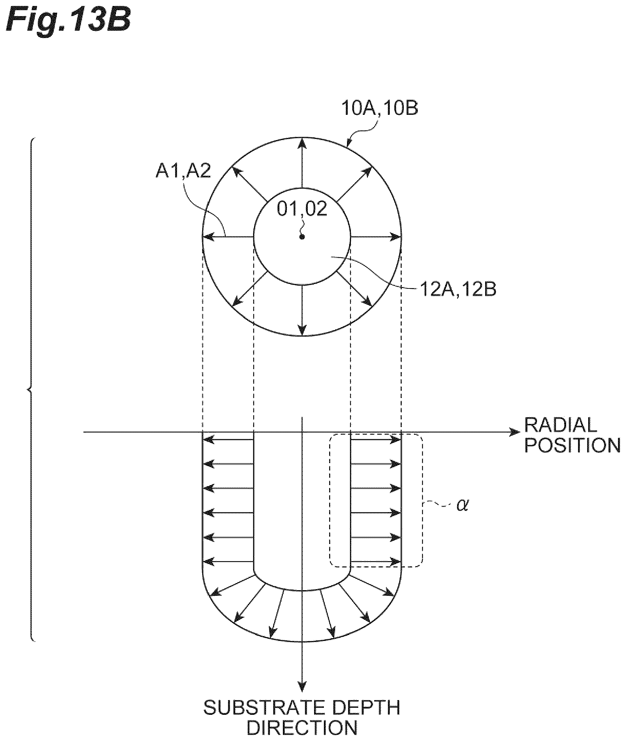

Incidentally, Fig. 13A is a schematic view for describing a polarization orientation in a crystal region formed using laser light having the light intensity distribution illustrated in Fig. 5. In addition, Fig. 13B is a schematic view for describing a polarization orientation in a crystal region formed by a method for manufacturing the optical wavelength converter according to the fifth modification.

In the above-described embodiment and the first to fourth modifications to which the fs laser light is not applied, an orientation of an irradiation material (the substrate 2) in a depth direction is not perfectly parallel to the surface of the substrate 2 as illustrated in Fig. 13A, but is slightly inclined in the depth direction.

On the other hand, when the fs laser light and the pulsed laser light with the pulse width of 1 ns or more are emitted in a state where the condensing regions of the respective beams of laser light overlap each other, the temperature is selectively raised along the depth direction of the irradiation material (the substrate 2) due to the hot filament effect. Therefore, the orientation of the irradiation material in the depth direction is parallel to the surface of the substrate 2 in a region α as illustrated in Fig. 13B. Although shapes of the pores (laser processing marks) 12A and 12B depend on a condensing condition of the fs laser, it is also possible to process a shape having a high aspect ratio with a diameter of about 10 µm and a depth of 100 µm or more depending on an irradiation condition (see the above-described Non-Patent Document 2). Since a shape of the hot filament 110 depending on the processed shape is formed to be perpendicular to the depth direction and is polarized to be perpendicular to the temperature contour, and the polarization of the region α illustrated in Fig. 13B is oriented in parallel to the surface of the substrate 2 as much as possible. As a result, the highly efficient wavelength conversion is possible depending on the polarization of incident light. Incidentally, a Ti:S laser, a 1 µm-band fiber laser, or SHG of such a light source is effective as a light source configured to output the fs laser light.

### (Examples)

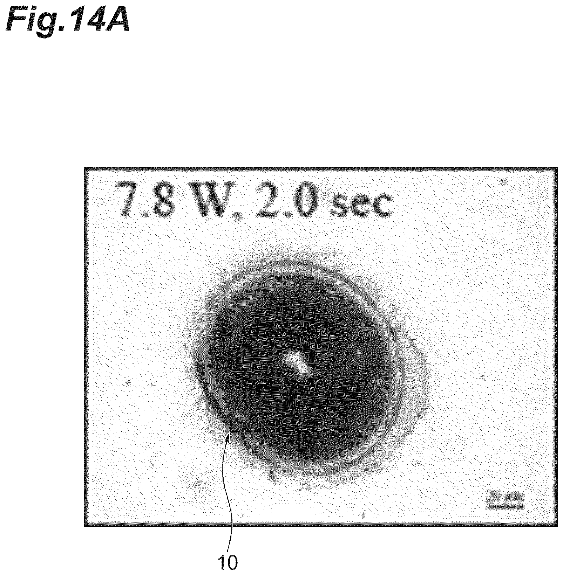

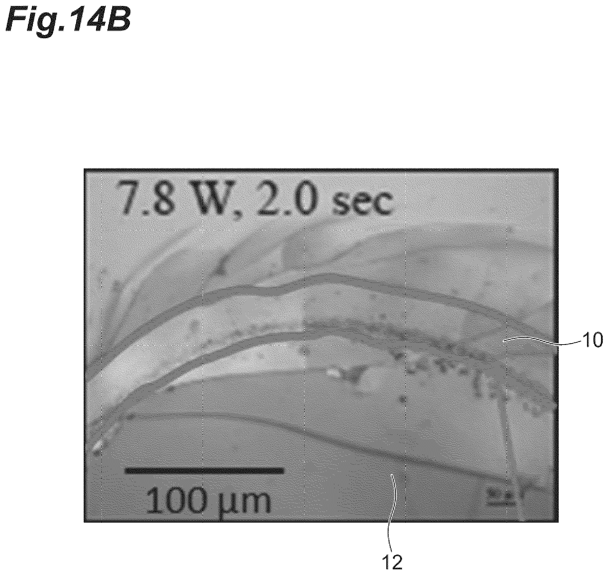

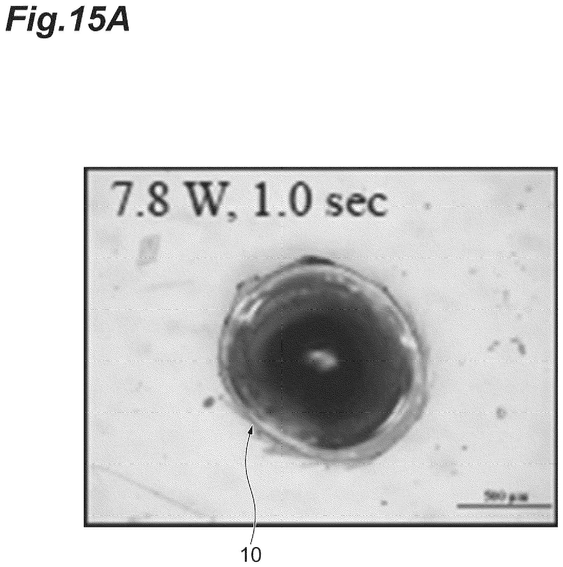

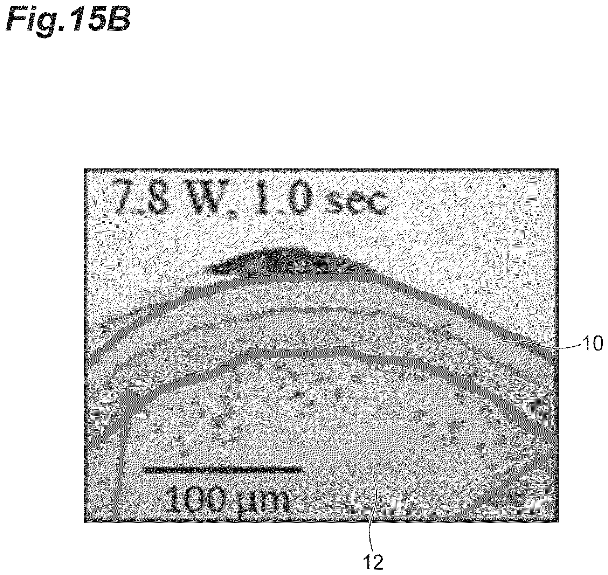

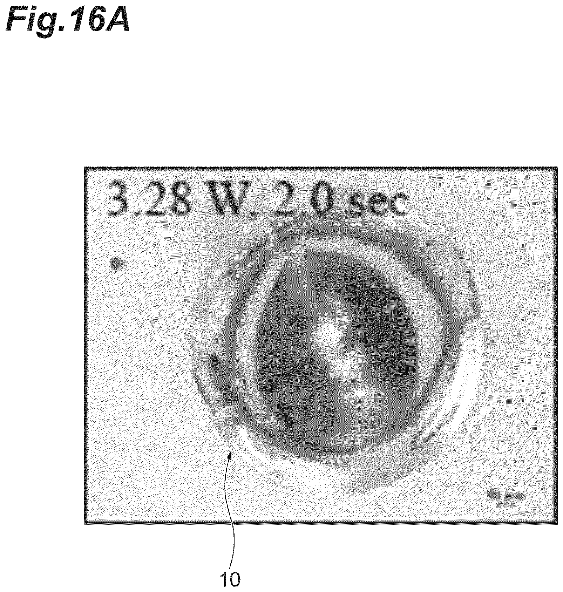

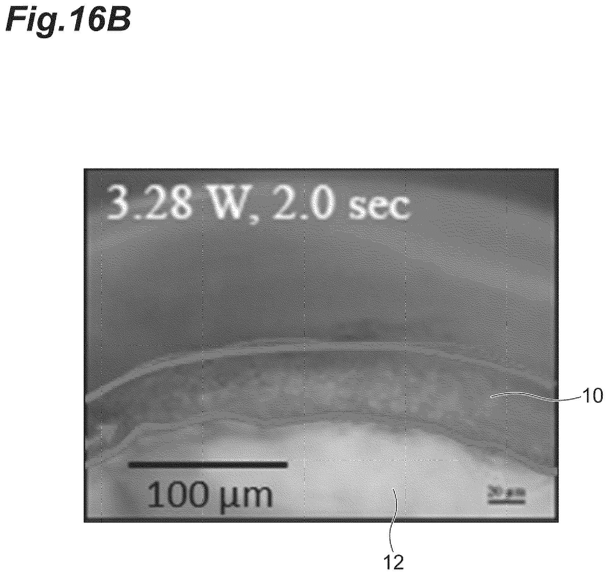

Figs. 14A, 15A, and 16A are optical microscope images illustrating states after irradiating a SrO-TiO₂-SiO₂-based glass with laser light from a CO₂ laser. Fig. 14A illustrates a state where an output of laser light is 7.8 W and an irradiation time is 2 seconds. Fig. 15A illustrates a state where the output of the laser light is 7.8 W and the irradiation time is 1 second. Fig. 16A illustrates a state where the output of the laser light is 3.28 W and the irradiation time is 2 seconds. Incidentally, Figs. 14B, 15B, and 16B are partially enlarged views of Figs. 14A, 15A, and 16A, respectively. Under all the irradiation conditions, a pore (laser processing mark) 12 was generated, and a crystallized region, that is, a crystal region 10 (corresponding to the crystal regions 10A and 10B) was formed around the pore 12.

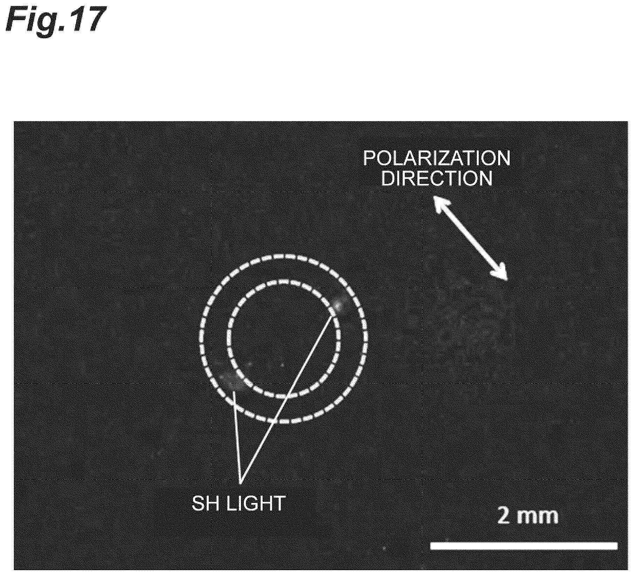

In order to clarify an orientation of an optical axis of the crystal region 10, the present inventors have performed measurement by second harmonic generation using laser light with a wavelength of 1.06 µm and a light diameter of about 2 mm. Fig. 17 is an image illustrating a measurement result of the second harmonic generation (SHG). Incidentally, Fig. 17 also illustrates a polarization direction of the laser light used for the measurement. Second-order nonlinear optical constants (d constants) of the SrO-TiO₂-SiO₂-based glass have a relationship of d₃₁ > d₃₃, and SH light with d₃₁ is preferentially observed in this measurement. As illustrated in Fig. 17, a pair of beams of SH light was observed in the crystal region 10 formed in an annular shape in this experiment. Incidentally, these beams of SH light were generated on a straight line passing through the center of the crystal region 10 and extending in a direction orthogonal to the polarization direction.

The SH light is SH light caused by the d₃₁ component, and the direction of polarization of this SH light is perpendicular to an incident wavefront. That is, it is understood that the direction of polarization extends along a straight line connecting a generation region of the SH light and the center of the crystal region 10 and is radial. This indicates that the crystal region 10 having a radial polarization-ordered structure can be formed by irradiating the substrate 2 with the laser light.

The optical wavelength converter of the present disclosure is not limited to the above-described embodiments (including the modifications), and various other modifications can be made. For example, the embodiments and the respective modifications described above may be combined with each other in accordance with necessary purposes and effects. In addition, the fresnoite-type crystal, the BaO-TiO₂-GeO₂-SiO₂-based glass, and the SrO-TiO₂-SiO₂-based glass have been exemplified as the substrate material in the above-described embodiments and modifications, but various materials which are crystalline or amorphous and transparent to a desired wavelength are applicable to the substrate of the present disclosure.

### Reference Signs List

1A, 1B, 1C, 1D ... optical wavelength converter; 2 ... substrate; 2a, 2b... end face; 2c, 2d ... region; 10, 10A, 10B ... crystal region; 12A, 12B ... pore (laser processing mark); 21 ... channel optical waveguide structure; 21a, 21b ... side face; 30 ... laser light source; 30A ... first light source; 30B ... second light source; 31 ... light-absorbing material; 40A ... condenser lens; 40B ... aspheric lens; 50 ... diffractive optical element; 60 ... half mirror; A1, A2 ... spontaneous polarization; AX, AX1, AX2 ... virtual axis; B1, B2 ... wavelength conversion region; B1a ... one end; B1b ... other end; D1 ... optical waveguide direction; D2 ... direction; La ... laser light; Lb1 ... first laser light; Lb2 ... second laser light; O1, O2 ... radial center; PI, P2 ... condensing point; and OP1, OP2, OP3 ... optical component.

## Claims

1. An optical wavelength converter comprising:
a substrate comprised of a crystalline material or an amorphous material, the substrate having a first region and a second region defined to be directly adjacent to each other with a virtual axis therebetween when the substrate is viewed from a reference direction orthogonal to the virtual axis set in the substrate;
a plurality of first crystal regions respectively having radial first polarization-ordered structures with radial centers arranged along the virtual axis in the first region of the substrate, each of the plurality of first crystal regions partially protruding to the second region across the virtual axis when the substrate is viewed from the reference direction; and
a plurality of second crystal regions respectively having radial second polarization-ordered structures with radial centers arranged along the virtual axis in the second region of the substrate, each of the plurality of second crystal regions partially protruding to the first region across the virtual axis in a state where the radial centers of the second polarization-ordered structures are arranged alternately with the radial centers of the first polarization-ordered structures along the virtual axis when the substrate is viewed from the reference direction.

2. The optical wavelength converter according to claim 1, wherein
the substrate has a channel optical waveguide structure having the virtual axis as an optical axis.

3. The optical wavelength converter according to claim 1, wherein
the substrate includes at least one of a fresnoite-type crystal, a BaO-TiO₂-GeO₂-SiO₂-based glass, and a SrO-TiO₂-SiO₂-based glass.

4. The optical wavelength converter according to claim 3, wherein
the substrate includes at least one of a BaO-TiO₂-GeO₂-SiO₂-based glass and a SrO-TiO₂-SiO₂-based glass, and further include metal included in any group of lanthanoids, actinides, and Groups 4 to 12 as an additive.

5. A method for manufacturing an optical wavelength converter comprising:
a preparation step of preparing a substrate comprised of a crystalline material or an amorphous material, the substrate having a first region and a second region defined to be directly adjacent to each other with a virtual axis therebetween when the substrate is viewed from a reference direction orthogonal to the virtual axis set in the substrate; and
a first processing step of providing in the substrate a plurality of first crystal regions respectively having radial first polarization-ordered structures with radial centers arranged along the virtual axis in the first region of the substrate and a plurality of second crystal regions respectively having radial second polarization-ordered structures with radial centers arranged along the virtual axis in the second region of the substrate, each of the plurality of first crystal regions partially protruding to a second axis across the virtual axis when the substrate is viewed from the reference direction, and each of the plurality of second crystal regions partially protruding to the first region across the virtual axis in a state where the radial centers of the second polarization-ordered structures are arranged alternately with the radial centers of the first polarization-ordered structures when the substrate is viewed from the reference direction, and
wherein the first processing step comprises a laser light irradiation step, and
the laser light irradiation step includes irradiating each of a plurality of first condensing points corresponding to the radial centers of the first polarization-ordered structures of the plurality of first crystal regions and each of a plurality of second condensing points corresponding to the radial centers of the second polarization-ordered structures of the plurality of second crystal regions with laser light for formation of the first and second polarization-ordered structures.

6. The method for manufacturing an optical wavelength converter according to claim 5, wherein
the laser light has a wavelength included in an absorption wavelength band of the substrate.

7. The method for manufacturing an optical wavelength converter according to claim 5, wherein
the laser light includes first laser light for generation of a high-density excited electron region on a surface of or inside the substrate, and second laser light for heating of the high-density excited electron region, and
the laser light irradiation step includes irradiating each of the plurality of first condensing points and each of the plurality of second condensing points with the first laser light and the second laser light in a state where a condensing region of the second laser light overlaps a condensing region of the first laser light.

8. The method for manufacturing an optical wavelength converter according to claim 7, wherein
the first laser light includes fs laser light having a pulse width of less than 1 ps and having a wavelength outside an absorption wavelength band of the substrate or a wavelength at which an amount of light absorbed by the substrate is suppressed to be low.

9. The method for manufacturing an optical wavelength converter according to claim 7, wherein
the second laser light includes pulsed laser light having a pulse width of 1 ps or more and having a wavelength outside an absorption wavelength band of the substrate or a wavelength at which the amount of light absorbed by the substrate is suppressed to be low in a region other than the condensing region of the first laser light.

10. The method for manufacturing an optical wavelength converter according to claim 7, wherein
the second laser light includes CW laser light having a wavelength outside an absorption wavelength band of the substrate or a wavelength at which the amount of light absorbed by the substrate is suppressed to be low in a region other than the condensing region of the first laser light.

11. The method for manufacturing an optical wavelength converter according to claim 5, further comprising
a second processing step of forming a channel optical waveguide structure having the virtual axis as an optical axis on the substrate, before or after the laser light irradiation step.

12. The method for manufacturing an optical wavelength converter according to claim 11, wherein
the channel optical waveguide structure is formed by a dicing saw or dry etching.

13. The method for manufacturing an optical wavelength converter according to claim 5, wherein
the laser light irradiation step includes irradiating the substrate with the laser light via an optical component configured to shape a light intensity distribution of the laser light into a top hat shape.

14. The method for manufacturing an optical wavelength converter according to claim 13, wherein
the optical component includes a diffractive optical element or an aspheric lens.

15. The method for manufacturing an optical wavelength converter according to claim 5, wherein
a light source of the laser light includes a CO₂ laser.

16. The method for manufacturing an optical wavelength converter according to claim 5, wherein
the laser light irradiation step includes irradiation the substrate with the laser light in a state where a light-absorbing material is arranged on the surface of the substrate.

17. The method for manufacturing an optical wavelength converter according to claim 16, wherein
the light-absorbing material is a carbon paste.
